# EUROPEAN PATENT SPECIFICATION

(11) **EP 3 371 408 B1**
(45) Date of publication and mention of the grant of the patent: **07.09.2022**
(21) Application number: 17761113.4
(22) Date of filing: 24.07.2017
(51) Int. Cl.: E06B 3/263, E06B 5/16, C08G 18/09, C08G 18/76, C08G 18/16, C08G 18/42

(54) **HIGH FIRE-RESISTANT POLYISOCYANURATE, AND USE THEREOF TO MANUFACTURE FIRE DOOR OR WINDOW FRAMES AND/OR PROFILES THEREFOR**
HOCHGRADIG FEUERBESTÄNDIGES POLYISOCYANURAT UND VERWENDUNG DAVON ZUR HERSTELLUNG EINER BRANDSCHUTZTÜR ODER VON FENSTERRAHMEN UND/ODER PROFILEN DAFÜR
POLYISOCYANURATE HAUTEMENT RÉSISTANT AU FEU, ET SON UTILISATION POUR LA FABRICATION DE CADRES DE PORTES OU DE FENÊTRES COUPE-FEU ET/OU DE PROFILÉS POUR CEUX-CI

(30) Priority: 22.07.2016 IT 201600076956; 22.07.2016 IT 201600077120; 22.02.2017 IT 201700020023; 22.02.2017 IT 201700020006; 22.02.2017 IT 201700020013
(43) Date of publication of application: 12.09.2018
(73) Proprietor: Doors & More S.R.L., 38089 Storo (TN) (IT)
(72) Inventor: MODESTI, Michele, 35127 Padova (PD) (IT); BENUSSI, Giampaolo, 25122 Brescia (BS) (IT); POLETTI, Susanna, 38089 Storo (TN) (IT); SAI, Gianfranco, 38089 Storo (TN) (IT)
(74) Representative: Autuori, Angelo
(86) International application number: PCT/IB2017/054463
(87) International publication number: WO 2018/015938

(56) References cited:
- WO-A1-2013/174844
- WO-A1-2014/055318
- US-A- 3 644 168
- US-A- 4 317 791
- US-A1- 2015 028 247
- US-A1- 2015 051 301
- US-B1- 6 245 826

## Description

### Field of application

The present invention applies to the polymeric material technical industry, and it regards a profile for fire doors or windows consisting of a high flame-resistant polyisocyanurate polymer, as well as the use of such polymer to manufacture fire doors/windows and/or profiles therefor.

### Definitions

Isocyanate index: is the stoichiometric ratio between isocyanate groups which are reactive towards isocyanate, multiplied by 100. All groups present in the reaction mixture which are reactive towards the isocyanate group, but not the isocyanate group itself, are considered groups which are reactive towards isocyanate. Examples of groups which are reactive towards -NCO are OH-, SH-, NH-, CH-acid.

Aromatic isocyanate (or polyisocyanate): is a polyfunctional isocyanate containing at least one aromatic ring. Examples are 2,2' diphenylmethane diisocyanate, 2,4 diphenylmethane diisocyanate, 4,4' diphenylmethane diisocyanate, 2,4 toluene diisocyanate, 2,6 toluene diisocyanate, naphthalene diisocyanate.

Isocyanate functionality: is the average number of isocyanate groups per polyisocyanate mole.

Polyol functionality: is the average number of OH groups per polyol mole.

Polyol hydroxyl number: indicates the amount of OH groups in the polyol per weight unit thereof. It is usually established by titration through methods known to a man skilled in the art and it is expressed as mg of KOH per gram of polyol.

Aromatic polyester polyol: is a polyol prepared by condensing polyfunctional alcohols having 2 to 12 carbon atoms with polyfunctional aromatic carboxylic acids having 6 to 12 carbon atoms, such as for example phthalic acid, isophthalic acid, terephthalic acid or phthalic anhydride and naphthalene dicarboxylic acid isomers or anhydrides thereof.

Deaerating agent: is a compound suitable to be interposed in the surface of air bubbles in a mass undergoing reaction considerably reducing surface tension and facilitating the collapse of the air bubbles. For example, the deaerating agent could be polysiloxane in non-aqueous solution.

Chain extender agent: is a low molecular weight, di- or polyfunctional alcohol or amine which contributes to increase of molecular weight and/or cross-linking and confers the polymer a more rigid structure. For example, typical chain extenders are 1,4-butanediol, ethylene glycol, 1,6-hexanediol, glycerine.

Percentage by weight (% by weight): is the percentage of a component of interest in a mixture of interest by weight, the percentage by weight being compared to the total weight of the components in said mixture of interest.

Composition: mixture of reagents required to obtain the polyisocyanurate according to the invention.

Door/window frame (or frames): is used to indicate the door/window frame, the closing element or shutter frame and the elements of the structure of a continuous glass window.

Fire door/window: closing element, for example a shutter, door, window or continuous glass window compartmentalisation wall of the fire damper, flame damper, smoke damper type or the like. These fire doors/windows must pass a certification and/or approval test before being placed in the market.

The reference certification and/or approval test for fire doors/windows in form of doors and/or windows is EN UNI 1634-1:2014 standard (Fire resistance and smoke control tests for door and shutter assemblies, openable windows and elements of building hardware - Part 1: Fire resistance test for door and shutter assemblies and openable windows) with temperature-time curve described in the EN UNI 1363-1 ( Fire resistance tests - Part 1: General requirements) and EN UNI 1362-2:2001 (Fire resistance tests - Alternative and additional procedures) standards.

The reference certification and/or approval test for fire doors/windows in form of continuous glass window compartmentalisation wall (even with large surface, for example the façade of a building), which comprises a frame with structural and infill functions for example made of glass, is the EN UNI 1364-1:2015 standard (Fire resistance for non-loadbearing elements) with the temperature-time curve described in the EN UNI 1363-1 and EN UNI 1363-2:2001 standards.

In both cases, the certification and approval test does not regard a single component but rather the entire door/window as a whole.

Density: apparent density measured in compliance with the EN ISO 845:2006 standard (Determination of apparent density).

Compact polyisocyanurate: is used to indicate a substantially porosity-free solid polyisocyanurate with density higher than 800 Kg/m³, preferably higher than 1000 Kg/m³ and in particular higher than 1100 Kg/m³.

### State of the Art

Polyurethanes (abbreviated as PUR) are polymers obtained through condensation reaction between compounds containing R₁ with at least two isocyanate-reactive groups (-NCO) and R₂ compounds with at least two groups reactive towards the isocyanate for example the hydroxyl group (OH) and/or the amine group (NH₂). The isocyanate index, an index obtained by multiplying the isocyanate groups / groups reactive towards the isocyanate ratio by 100, is the most important parameter when defining a PUR. For example, a PUR obtained through reaction between an isocyanate group and a group reactive towards an isocyanate in a 1:1 stoichiometric ratio corresponds to a 100 isocyanate index.

A polyurethane with a 100 isocyanate index substantially consists of linear or branched chains -[R₁-urethane group R₂-urethane group-R₁]-. A polymer with index higher than 100 contains compounds of mutually reacting isocyanate groups forming trimers for instance. Given that the aforementioned trimers can be considered as cyanuric acid derivatives, the polymer is referred to as polyisocyanurate, abbreviated as PIR, or PUR/PIR system.

PUR is usually prepared in expanded form with density ranging between 30 kg/m³ and 800 kg/m³ by adding expanding agents which, developing a gas during polymerisation, cause the formation of an assembly of cavities, usually closed, in the viscous mass undergoing reaction, these cavities being incorporated and fixed in the hardened polymer. Expanding agents may be physical, i.e. low-boiling liquids which evaporate due to the considerable reaction heat, or chemical, for example water, which reacts with the -NCO group with final formation of CO₂.

Per se, PUR is not resistant to fire and it burns with considerable emission of dense and opaque smoke.

Appropriate additives and/or reagents, polyols generally, are added in a per se known manner prior to condensation reaction so as to increase fire resistance. They can act by diluting the polymer in that non-combustible (mineral fillers, alumina), creating water which absorbs heat and reduces degradation reactions (hydrated aluminium oxides), creating gases that do not sustain the flame (nitrogenated and/or chlorinated compounds), swelling (expansible graphite) or creating carbonaceous layers, commonly referred to by the English expression *char* (phosphorus compounds, phosphoric acid salts and/or esters, phosphinates) in the industry. Having a cross-linked structure, PIR polymers reveal greater easiness towards aromatisation and the ensuing formation of carbonaceous compounds. Highly cross-linked PIR - with isocyanate index higher than 100, up to 1500 - is used in cases where fire resistance is required.

EP0464204 describes a polyisocyanurate with 150 isocyanate index expanded with freon and containing expanding graphite as flame retardant.

EP1288239 describes a process for preparing expanded PIR/PUR systems having a density of about 40 kg/m³ by means of a trimerisation catalyst and substituted carboxylic acids.

EP1770118 addresses a low-density polyisocyanurate, foamed by reaction between isocyanate and water, the latter present between 3% and 8% by weight of polyol. The polyol component is a polyester polyol mixture with an average hydroxyl number between 140 and 220 mg KOH/g.

All the aforementioned PUR/PIR or PIR polymers are expanded, substantially heat or acoustic insulators. After exposure to fire, the carbonaceous residue of a PIR expanded according to the prior art, is very friable even though the initial expanded PIR was rigid with good mechanical properties.

This is unacceptable when PIR is required to have sufficient mechanical resistance after exposure to the flame, for example after a fire breaks out.

EP1967535B1 describes a rigid and compact polyisocyanurate system, with good flame resistance, obtained from the condensation of an aromatic isocyanate with functionality lower than 2.5, with a polyether polyol having 95% of the OH groups on secondary carbon in presence of a tertiary amine and potassium formate as trimerisation catalyst. Chain extenders, fillers and flame-retardant additives are also present.

For some applications, for example for obtaining profiles for fire doors/windows frames, the carbonaceous residue is required not only to have a very high flame resistance but also a high mechanical resistance even after the fire. In the fire operating conditions, polymers are required to carbonise up to obtaining a compact carbonaceous structure provided with mechanical resistance with limited formation of smoke, in particular without forming dense and opaque smoke that makes it difficult to identify emergency escape routes or the surrounding environment. The absence of dense and opaque smoke is required by the current fire safety standards.

Currently known PUR/PIR systems do not meet the aforementioned standards fully. Even though they pass the common fire reaction tests and do not sustain the flame, these prior art materials generate a considerable amount of opaque totally dark smoke in case of fire. Furthermore, though forming *char,* this carbonaceous residue does not maintain sufficient mechanical resistance and crumbles easily and rapidly even upon the slightest stress.

For some applications, for example in building structures or in complex products such as for example fire retardant or fire damper doors/windows, besides being required to pass appropriate tests provided for by the law, the entire element is particularly required to remain intact and not collapse. This implies that the polymer carbonisation product has sufficient mechanical properties, i.e. resistance to compression and bending. Thus, the structure remains intact even though parts thereof, for example exposed parts and thus for aesthetic purposes only, collapse or melt. For example, doors/windows with glass windows of the prior art having profiles containing PUR/PIR systems as the bearing structure do not pass the approval tests.

Fire doors/windows or the like generally consist of a framework, also referred to as "subframe", generally embedded in the support wall of the opening to be closed, a door/window frame connected to the subframe, for example by means of screws and a closing element connected to the door/window frame.

The closing element may consist of one or more openable doors and/or fixed elements. In both cases, they may comprise a door frame both for aesthetic and structural purposes and infill portions, such as glass.

In another embodiment, the door/window may form a continuous glass window compartmentalisation wall, even with large surface, for example a façade of a building, and it comprises a frame for structural and infill purposes, for example made of glass.

Obviously, such per se known glasses meet the appropriate high temperature and fire resistance quality requirements.

In case of a glass window fire door applied to a masonry wall, the subframe is embedded in the wall, the door/window frame is the door frame, the frame of the closing element is the shutter frame and the infill is constituted by a multilayer glass slab.

The door and shutter frames are built by the doors/windows specialist using straight semifinished products generally sold measuring six metres long and referred to as profiles, usually consisting of one or more straight elements referred to as profiles.

In any case, the profiles comprise one or more metal sections provided with one or more hollow box-shaped bodies which enable a predetermined degree of heat insulation. The connection between the parts of the box-shaped bodies is often made of heat insulating material with the aim of increasing overall heat insulation. Furthermore, the interior of the box-shaped bodies is also filled with heat insulating material so as to enhance the insulating effect even further.

When manufacturing the frames, the profiles are cut to size, welded to each other to form the frames and subsequently painted with the paint being dried in a furnace at about 200° C. The insulating material must be inert, not react and not degrade at this temperature.

From US3644168 a polyisocyanurate for manufacturing fire doors or windows is known.

### Presentation of the invention

An object of the present invention is to provide a profile for doors and windows consisting of a polyisocyanurate, whether compact or expanded, with high flame resistance and capable of carbonising forming a resistant and self-sustaining residual carbonaceous structure without collapsing or crumbling upon exposure to the flame at the test conditions or in case of fire.

The polyisocyanurate for a profile according to the present invention has extremely high fire resistance performance, thus obtaining a fire door/window capable of passing the test in compliance with the UNI EN 1634-1 and/or UNI-EN 1364-1 standards.

As a matter of fact, under test conditions in compliance with the aforementioned standards and once subjected to the relative temperature-time curve, such material carbonises to a carbonaceous structure with mechanical properties sufficient to counter heat dilatations and sustain the entire structure.

The polyisocyanurate for the profile of the present invention is prepared starting from a composition as defined in claim 1.

The polyisocyanurate may be prepared by mixing all the aforementioned components or, preferably, by mixing a first component A and a second component B.

Suitably, the first component consists of an aromatic polyester polyol, at least one trimerisation catalyst and additives as described in claim 1.

The second component comprises aromatic polyisocyanates having functionalities higher than or equal to 2,5.

Thus, the polyisocyanurate according to the invention may be obtained by mixing the two components A and B so that the isocyanate index is comprised between 200 and 400, preferably between 300 and 350.

Preferably, the aromatic isocyanates have a functionality comprised between 2.7 and 2.9.

Examples of such isocyanates are 2,2- 2,4 and 4,4-diisocyanate, the mixtures of monomeric diphenylmethane with diphenylmethane diisocyanate homologs (polymeric MDI), or its oligomers, or 2,4- 2,6-toluene diisocyanate (TDI) or their mixtures, tetramethylene diisocyanate or its oligomers, hexamethylene diisocyanate (HDI) or its oligomers, naphthalene diisocyanate (NDI) or their mixtures. In any case, the average functionality of such polyisocyanates may be higher than 2.5.

Preferably, a mixture of 4,4'-diphenylmethane diisocyanate with isomers and homologs with higher functionality may be used so as to have a mixture functionality comprised between 2.7 and 2.9 and with NCO content preferably comprised between 25% and 35% by weight, more preferably between 30.5% and 32,5% by weight. The amount of isocyanate is comprised between 50% and 70%, preferably between 58% and 63% by weight compared to the total weight of all components used for preparing the formulation.

The polyols are compounds containing at least two groups reactive towards isocyanate such as OH, SH, NH and CH-acid.

Such polyols may be prepared according to known methods.

According to the invention, the polyester polyols may have a hydroxyl number comprised between 250 and 400 mg KOH/g, preferably between 300 and 350 mg KOH/g, and with functionality ranging between 2 and 3, preferably substantially equal to 2.

The polyester polyols may be prepared by condensing polyfunctional alcohols with polyfunctional carboxylic acids having 2 to 12 carbon atoms, such as phthalic acid, isophthalic acid, terephthalic acid and naphthalene dicarboxylic acid isomers or their anhydrides.

The catalysts for facilitating the trimerisation of the isocyanate are known. Preferably, organometallic compounds may be used, preferably alkali metal salts of 1 to 10-carbon atom long-chain acids, preferably potassium organic salts such as for example potassium formate, potassium acetate, potassium octoate or their mixtures.

The catalysts may be used separately or mixed in a concentration ranging between 0.1% and 0.5% by weight, preferably between 0.3% and 0.4% by weight compared to the total weight of all components used to prepare the polyisocyanurate.

Further potential "traditional" catalysts are catalysis systems comprising tertiary amines. According to the invention, such amines do not confer additional advantages to cross-linking and thus the catalysis system is amine-free, in particular tertiary amines so as to reduce the complexity of the catalysis system as well as the environmental impact thereof.

Suitably, the aforementioned composition is free of chain extender agents.

Flame retardants, per se known to a man skilled in the art, could also be added to the reagents. Phosphoric acid esters such as triethyl phosphate, dimethyl propyl phosphate, phosphinates, for example ethyl ethane phosphinate, phosphonates such as diethyl ethane phosphonate, triethyl ethane phosphonate, dimethyl propyl pohosphonate, diphenyl-propyl phosphonate, or inorganic such as hypophosphites, red sulphur, preparations comprising red sulphur, expansible graphite, expanded graphite, hydrated aluminium oxide, antimony trioxide, ammonium polyphosphate, cyanuric acid derivatives such as melamine or their mixtures can be added for instance.

Suitably, flame retardants could preferably be added in an amount of 1% to 10% by weight, preferably between 3% and 5% by weight, compared to the total weight of all components used to prepare the formulation.

Conventional reinforcement organic and inorganic fillers and/or loads known to a man skilled in the art could be used optionally. Examples of inorganic fillers are mineral silicates, such as silica, phyllosilicates, glass balls, talc, kaolinite, wollastonite, aluminium oxides, titanium oxides and iron oxides, gypsum, baryte and inorganic pigments, variable length fibrous minerals such as glass, cellulose, polyamide, polyacrylonitrile, polyurethane, polyester and carbon fibres.

Inorganic and organic fillers can be used separately or in mixtures in amounts ranging between 0.1% and 30% by weight compared to the total weight of all components used to prepare the polyisocyanurate compared to the total weight of all components used to prepare the composition.

Depending on the density of the polyisocyanurate, some additives can be used or omitted.

For example, it is preferable to avoid the use of water and expanding graphite to prepare substantially porosity-free compact polyisocyanurate with density higher than 800 Kg/m³, preferably higher than 1000 Kg/m³ and in particular higher than 1100 Kg/m³. Expanding graphite causes breaking upon expanding due to the temperature.

As a matter of fact, as known, the isocyanate group reacts with water forming CO₂ and this reaction is commonly used to obtain an expanded product. Even the humidity absorbed from the air by the reagents, polyol in particular, is per se sufficient to introduce a porosity that suffices to obtain a relatively low density into the formed polymer. The humidity present or absorbed by the aforementioned reagent system may be removed therefrom by adding additives for the adsorption of the same (dehydrating agent).

Zeolites suitably exchanged and dispersed in oil, castor oil for instance, can be used as adsorbents. An amount of isocyanate comprised between 1% and 3%, preferably between 2% and 2.5% by weight compared to the total weight of all components used for preparing the formulation, with 50% castor oil, is suitably added.

The average dimension of the zeolite particles may be lower than 200 µm, preferably lower than 100 µm with pore dimension preferably between 2 and 5 angstroms. The total water content will be lower than 0.5% by weight, preferably lower than 0.3% by weight compared to the total weight of all components used to prepare the formulation.

A deaerating agent in amounts between 0.01% and 1% by weight, preferably between 0.2 and 0.5% by weight, compared to the total weight of all components used to prepare the formulation, may be added so as to obtain the desired final density.

The deaerating agent may be a polyoxyalkene-polysiloxane-based copolymer.

Thus, a substantially porosity-free compact polyisocyanurate with density higher than 800 Kg/m³, preferably higher than 1000 Kg/m³ and even more preferably higher than 1100 Kg/m³, is prepared starting from a composition as defined in claim 1.

The characteristics of the polyols and/or the isocyanate index of the composition may be the one mentioned above.

The aforementioned compact polyisocyanurate under the test conditions in compliance with the UNI EN 1634-1 or UNI EN 1364-1 standards, carbonises to a very compact and hard carbonaceous structure with mechanical properties sufficient to counter heat dilatations and sustain the entire structure.

The doors/windows obtained according to the invention may have a profile made up of the aforementioned compact polyisocyanurate, or the aforementioned compact polyisocyanurate may lie inside a "traditional" box-shaped structure so as to act as an insulator and contribute to the mechanical structure of the door/window.

In other words, the aforementioned compact polyisocyanurate characteristics enable to obtain a profile for doors/windows whose bearing structure is partly or exclusively made up of the compact polyisocyanurate. Finishing covers, for example made of plastic material, wood or light metal material, aluminium for example, may be applied on the profile thus obtained.

In this case, the compact polyisocyanurate acts both as a heat insulator and a mechanical structure for the door/window, the latter exclusively consisting of the compact polyisocyanurate.

To this end, the reagents from which the compact polyisocyanurate (composition) is obtained may be poured and/or injected into moulds and cured therein for a predetermined period of time.

On the other hand, the profile may include a box-shaped structure, made of any material, into which the reagents, from which the compact polyisocyanurate is obtained, may be poured and/or injected and cured.

In this case, the compact polyisocyanurate acts as a heat insulator and cooperates with the box-shaped structure to confer the mechanical structure to the door/window.

In a polyisocyanurate having density higher than 400 Kg/m³ the expanding graphite would tend to break the finished product and thus it is preferable that it not be used. Another reason to avoid use thereof lies in the fact that it tends to sustain the flame when exposed thereto, hence preventing it from extinguishing.

Furthermore, a small amount of water may be used as expanding agent in a polyisocyanurate having a high density comprised between 400 kg/m³ and 800 kg/m³. Such expanding agent may consist of less than 1 phr of water per 100 phr of polyol, preferably less than 0.5 phr of water per 100 phr of polyol.

Preferably, the only expanding agent to be used may be water at the amounts indicated above.

Thus, a polyisocyanurate having high density comprised between 400 kg/m³ and 800 kg/m³, is prepared starting from a composition as defined in claim 1.

The characteristics of the polyols and/or the isocyanate index of the composition may be the one mentioned above.

The aforementioned high density polyisocyanurate under the test conditions in compliance with the UNI EN 1634-1 or UNI EN 1364-1 standards, carbonises to a hard carbonaceous structure with mechanical properties high enough to counter heat dilatations and maintain the shape thereof without collapsing or crumbling.

The doors/windows obtained according to the invention may have a profile consisting of the aforementioned polyisocyanurate, or the aforementioned polyisocyanurate may lie inside a box-shaped structure so as to act as an insulator and contribute to the mechanical structure of the door/window. In particular, in case of blind doors which consist of a single box-shaped structure, the insulator remains intact without shattering into pieces, it does not accumulate at the lower part of the box-shaped element and it insulates the upper part of the door/window too.

In other words, the aforementioned polyisocyanurate characteristics enable to obtain a profile for doors/windows whose bearing structure is partly made up of the polyisocyanurate.

To this end, the reagents from which the high density polyisocyanurate (composition) is obtained may be poured and/or injected into special moulds and cured therein for a predetermined period of time.

On the other hand, the profile and/or blind door/window, may include a box-shaped structure, made of any material, into which the reagents, from which the polyisocyanurate is obtained, may be poured and/or injected and cured.

In this case, the polyisocyanurate acts as a heat insulator and cooperates with the box-shaped structure to confer the mechanical structure to the door/window.

A low density polyisocyanurate of the expanded type with density measured in compliance with the EN ISO 845:2006 standard comprised between 20 kg/m³ and 400 kg/m³, preferably comprised between 100 kg/m³ and 400 kg/m³ are prepared starting from a composition as defined in claim 1.

The characteristics of the polyols and/or the isocyanate index of the composition may be the one mentioned above.

The aforementioned expanded polyisocyanurate may be obtained exclusively using water as the chemical expander: as a matter of fact, the isocyanate group reacts with water forming CO₂ and this reaction can be used to obtain an expanded product.

According to an aspect of the invention, the expansion, and thus the porosity and density of the resulting polyisocyanurate, may be controlled by introducing an appropriate amount of water.

The use of additional flame retardant, expanding graphite, is preferable in case of porous polyisocyanurate.

Expanding graphite is an intercalary compound into which, between the graphene layers, there is introduced counterion sulphate anion of a carbon layer positively charged by the anodic oxidation with which it is prepared. Above the oxidation temperature, about 200 °C, the intercalary groups decompose forming large amounts of gas which move the graphite layers away and insulate the polymer surface from the comburent.

As shown in example 7, after carbonisation according to the invention, polyisocyanurate maintains a residual mechanical resistance.

The polyisocyanurate according to the invention, whether of the compact, high density or expanded type, may be obtained by mixing the components A and B or all the components described above at amounts such to obtain an isocyanate index between 300 and 350 at a temperature comprised between 10 °C and 80° C, preferably between 30° C and 40° C.

The reaction is exothermic. Mixing may occur in line at high or low pressure or using RIM techniques, per se known. For example, in order to manufacture a coving, component B and component A may be conveyed through pumps to a high pressure in-line continuous mixer, preferably a 100 to 300 bars mixer, and introduced into the mould, premixed and pressurised.

This method enables filling large moulds, even moulds with complex flow paths. The polyol and the isocyanate are at a temperature between 30° C and 120° C, preferably between 50° C and 100° C. The mould temperature is comprised between 70° C and 130 °C, preferably between 85° C and 110 °C. The reaction mixture which can be obtained according to the invention reveals a viscosity of about 800 mPas upon mixing at room temperature and a viscosity of about 600 mPas at 40° C. These viscosity values enable high fluidity.

Suitably, the aforementioned compositions may comprise a liquid phase and a solid phase, in which the latter is less than 5% by weight with respect to the total weight of the composition.

The invention may be clearer in light of the following examples, which shall be deemed provided for exemplifying and non-limiting purposes with respect to the invention.

### Examples

### Test method

The tests in compliance with the EN UNI 1634-1:2014 standard as regards doors and windows and in compliance with the EN UNI 1364-1:2015 standard as regards compartmentalisation, both to be carried out applying the temperature-time curve in compliance with the UNI 1363 standard part 1 and 2, require the introduction of the complete and finished door/window or continuous glass window, into a masonry wall measuring 4 × 4 metres representing the front surface of the test furnace. This test requires a large structure, several days of preparation time and it is very expensive. In addition, it can be exclusively used for certification by official bodies.

A method which revealed, as regards the polymer, data substantially identical to the data obtained from the standardised tests was formulated with the aim of testing the polyisocyanurate according to the invention. The tests below were carried out according to the following procedure.

An amount of polyisocyanate component B calculated so as to obtain the desired isocyanate index was added into a recipient containing a known amount of polyol component A under agitation. The obtained mixture is injected into a mould hardening therein.

After 5 minutes, the mould is opened and after a 24-hour ageing at room temperature, a cubic polymer specimen measuring 4 cm × 4 cm × 4 cm is taken from the resulting sample. The apparent density is measured in compliance with the EN ISO 845:2006 standard. The aforementioned specimen is placed on a heating plate with a 10 g/cm² load on the upper face and subjected to heating in air according to the temperature-time curve in compliance with EN ISO 1363. The temperature is detected by thermocouples arranged on the surface of the plate, on the upper face of the specimen and inside the specimen. The test is carried out qualitatively: presence of flames, emission of smoke, dripping of the polymer due to the melting thereof, deformation due to the weight thereof and the applied load were observed. To pass the test, the specimen must carbonise without deforming, it must not drip and there should be no flames and/or smoke, dense smoke in particular.

### Preparing compact polyisocyanurates

### Sample 1 - Very high density polyisocyanurate

Polyol component A is prepared in a recipient in which aromatic polyester polyol (Isoexter, Coim, Italia) had been previously placed and to which - at room temperature, without cooling or heating, under agitation - a polyether modified polysiloxane copolymer surfactant (Tegostab, EVONIK), a potassium octoate in monoethylene glycol (Kosmos, EVONIK) as trimerisation catalyst, a phosphoric acid ester (triethyl phosphate) as flame retardant agent, zeolites 3A dispersed at 50% by weight in castor oil as dehydrating agent, a polysiloxane in glycols (BYK-067A, Altana) as deaerating agent were added in succession. After preparation, component A can be preserved for about six months at room temperature in a closed recipient so to prevent the absorption of atmospheric humidity.

Isocyanate component B is a polymeric mixture based on 4,4' diphenylmethane diisocyanate (MDI)with homologs and isomers, said polymeric mixture having a functionality of about 2.9 and with an overall NCO content in component B comprised between 30.5% and 32.5% by weight (Desmodur, Covestro). Component B can be preserved for about six months at room temperature in a closed recipient so to prevent the reaction of the isocyanate group with atmospheric numidity.

An amount of component B calculated so as to obtain an isocyanate index equivalent to 300 was added into a recipient containing a known amount of component A under agitation. The resulting mixture is injected into the mould hardening therein.

Table 1a shows the sample composition and the test thereof.

After carbonisation, the specimen revealed a glassy structure with a 980 kPa compression resistance measured in compliance with ISO 844.

### Samples 2 -6 - High density polysocyanurate

Polyol component A is prepared in a recipient in which aromatic polyester polyol (Isoexter, Coim, Italia) had been previously placed and to which - at room temperature, without cooling or heating, under agitation - a polyether modified polysiloxane surfactant copolymer (Tegostab, EVONIK), a potassium octoate in monoethylene glycol (Kosmos, EVONIK) as trimerisation catalyst, a phosphoric acid ester (triethyl phosphate) as flame retardant agent, water, were added in succession. After preparation, component A can be preserved for about six months at room temperature in a closed recipient.

Isocyanate component B is prepared like in example 1.

An amount of component B calculated so as to obtain an isocyanate index equivalent to 300 was added into a recipient containing a known amount of component A under agitation. The resulting mixture is injected into the mould hardening therein.

The test is carried out as described in the test method.

Table 1a shows the sample compositions and the test thereof.

### Preparing expanded polyisocyanurates

### Samples 7 and 8 - Low density polyisocyanurate

Polyol component A is prepared like in example 2 with addition of expanding graphite with acid activation in flakes as an additional flame retardant agent, and water as a chemical expanding agent. After preparation, component A can be preserved for about six months at room temperature in a closed recipient.

Isocyanate component B is prepared like in example 2.

An amount of component B calculated so as to obtain the desired isocyanate index was added into a recipient containing a known amount of component A under agitation.

The test is carried out as described in the test method.

Table 1b shows the sample compositions and the test thereof.

After carbonisation, the sample 7 specimen revealed a porous glassy structure with a 133 kPa compression resistance measured in compliance with ISO 844.

### Comparison examples

### Samples 9 and 10 - Expanding graphite-free low density polyisocyanurates are unsuitable

The samples were prepared like in example 8 without adding expanding graphite.

The test is carried out as described in the test method.

Table 1b shows the sample compositions and the test thereof.

The samples, entirely identical to example 8, failed the test due to the absence of expanding graphite. The samples show that expanding graphite is required at low density.

### Samples 11 - 16 - Non-aromatic polyol is unsuitable

Using an aliphatic polyester polyol with functionality comprised between 2 and 2.5, a 160 mg KOH/g hydroxyl number; (ISOEXTER), obtained from condensation of glycols or 2 to 12 carbon atom glycol mixtures, such as for example ethylene glycol, diethylene glycol, butanediol glycol, trimethylolpropane glycol, glycerine with 4 to 12 carbon atom aliphatic carboxylic acids such as for example adipic acid, succinic acid, glutaric acid, azelaic acid, sebacic acid, decanoic acid, samples 11 and 12 were prepared using the method described above.

The test is carried out as described in the test method.

Table 1b shows the sample compositions and the test thereof.

Using an aliphatic/aromatic polyester polyol with functionality comprised between 2.0 and 2.5, (ISOEXTER) with 240 mg KOH/g hydroxyl number; obtained from condensation of glycols or 2 to 10 carbon atom glycol mixtures, such as for example ethylene glycol, diethylene glycol, butanediol glycol, trimethylolpropane glycol, glycerine with 4 to 12 carbon atom aliphatic carboxylic acids such as for example adipic acid, succinic acid, glutaric acid, azelaic acid, sebacic acid, decanoic acid, dodecanoic acid and with carboxylic acids with at least one aromatic ring such as for example terephthalic acid or ortho-phthalic anhydride, samples 13 and 14 were prepared using the method described above.

The test is carried out as described in the test method.

Table 1c shows the sample compositions and the test thereof.

Samples 15 and 16 were prepared using the materials like in examples 13 and 14 without dehydrating or deaerating agents and with addition of a water chemical expanding agent and expanding graphite. Furthermore, the isocyanate index is lower in example 15.

The test is carried out as described in the test method.

Table 1c shows the sample compositions and the test thereof.

### Samples 17 - 21 - Polyether polyol is unsuitable

### Sample 17

Using an amine-based polyether polyol with functionality comprised between 2 and 4, preferably comprised between 2.5 and 3.0, a hydroxyl number comprised between 100 and 400 mg KOH/g, obtained from toluenediamine using ethylene and propylene oxide, sample 17 was prepared using the method described above. Other components like in table 1.

The test is carried out as described in the test method.

Table 1c shows the sample compositions and the test thereof

### Samples 18 and 19

Samples 18 and 19, to which an ammonium phyllosilicate and polyphosphate were added as inorganic mineral filler, were prepared using the method described regarding example 17. Other components like in the table.

The test is carried out as described in the test method.

Tables 1c and 1d show the sample compositions and the test thereof.

### Samples 20 and 21

Using a polyether polyol with average functionality comprised between 2 and 4, preferably comprised between 2.5 and 3.0, a 160 mgKOH/g hydroxyl number; with prevalent base of ethylene/propylene oxide or 2 to 4-carbon atom compounds, with molecular weight comprised between 700 and 1400 Da, samples 20 and 21 were prepared using the method described above. Other components like in the table.

The test is carried out as described in the test method.

Table 1d shows the sample compositions and the test thereof

### Samples 22- 25 - Tertiary amines are not necessary

### Samples 22 and 23

Using an aliphatic polyester polyol with functionality comprised between 2 and 2.5, a 160 mg KOH/g hydroxyl number; (ISOEXTER), obtained from condensation of glycols or 2 to 12 carbon atom glycol mixtures, such as for example ethylene glycol, diethylene glycol, butanediol glycol, trimethylolpropane glycol, glycerine with 4 to 12 carbon atom aliphatic carboxylic acids such as for example adipic acid, succinic acid, glutaric acid, azelaic acid, sebacic acid, decanoic acid, with a first N-ethyl morpholine catalyst or N,N dimethyl cyclohexylamine catalyst, a second potassium acetate catalyst in diethylene glycol and a third carboxylated quaternary ammonium N-hydroxy-alkyl catalyst in ethylene glycol, samples 22 and 23 were prepared using the method described above. Further characteristics are indicated in table 1d, the results in table 2.

The test is carried out as described in the test method.

Table 1d shows the sample compositions and the test thereof

### Samples 24 and 25

Using an aromatic polyester polyol with functionality comprised between 2 and 2.5, a 250 mg KOH/g hydroxyl number; (ISOEXTER), with a first N-ethyl morpholine catalyst, a second potassium acetate catalyst in diethylene glycol and a third carboxylated quaternary ammonium N-hydroxy-alkyl catalyst in ethylene glycol, samples 24 and 25 were prepared using the method described above. Further components and/or characteristics are indicated in tables 1d and 1e.

### Samples 26 and 27 - High density polyisocyanurates with expanding graphite break

Polyol component A is prepared like in example 2 with addition of expanding graphite with acid activation in flakes as an additional flame retardant agent, and water as a chemical expanding agent. After preparation, component A can be preserved for about six months at room temperature in a closed recipient.

Isocyanate component B is prepared like in example 2.

An amount of component B calculated so as to obtain the desired isocyanate index was added into a recipient containing a known amount of component A under agitation.

The test is carried out as described in the test method.

Table 1e shows the sample compositions and the test thereof.

The present expanding graphite caused the breaking of the specimen during the test, the aforementioned breaking not being observed in samples 6 and 3 whose sole difference as compared to samples 26 and 27 lies in the absence of expanding graphite.

**Table 1a**

| Parts compared to 100 of polyol, values expressed as phr (parts per hundred resin) | | | | | | |
|---|---|---|---|---|---|---|
| | **Samp 1** | **Samp 2** | **Samp 3** | **Samp 4** | **Samp 5** | **Samp 6** |
| **Polyol** | 100 | 100 | 100 | 100 | 100 | 100 |
| **Polyol functionality** | 2.0 | 2.5 | 2.5 | 2.5 | 2.5 | 2.5 |
| **Hydroxyl number** | 250 | 250 | 250 | 250 | 250 | 250 |
| **Potassium octoate** | 1.0 | 1.0 | 1.0 | 1.0 | 1.0 | 1.0 |
| **N-ethyl morpholine** | | | | | | |
| **Potassium acetate** | | | | | | |
| **Carboxylated quaternary ammonium N-hydroxy-alkyl** | | | | | | |
| **Water** | - | 0.20 | 0.25 | 0.30 | 0.35 | 0.42 |
| **Surfactant** | 4 | 4 | 4 | 4 | 4 | 4 |
| **Mineral fillers** | | | | | | |
| **Polyphosphates** | | | | | | |
| **Triethyl phosphate** | 11 | 11 | 11 | 11 | 11 | 11 |
| **Expanding graphite** | | | | | | |
| **Dehydrating agent** | 8 | | | | | |
| **Deaerating agent** | 1 | | | | | |
| **Polyisocyanate** | 180 | 180 | 180 | 180 | 180 | 180 |
| **Isocyanate functionality** | 2.9 | 2.9 | 2.9 | 2.9 | 2.85 | 2.85 |
| **NCO % by weight in isocyanate** | 31 | 31 | 31 | 31 | 31.5 | 31.5 |
| **Density (IS0845:2006) kg/m³** | 1050 | 800 | 700 | 600 | 500 | 400 |
| **Dense smoke** | No | No | No | No | No | No |
| **Light smoke** | No | No | No | No | Yes | Yes |
| **Open flame** | No | No | No | No | No | No |
| **Dripping** | No | No | No | No | No | No |
| **Deformation** | No | No | No | No | No | No |
| **Breaking** | No | No | No | No | No | No |
| **Acceptable** | Yes | Yes | Yes | Yes | Yes | Yes |

**Table 1b**

| Parts compared to 100 of polyol, values expressed as phr (parts per hundred resin) | | | | | | |
|---|---|---|---|---|---|---|
| | **Samp 7** | **Samp 8** | **Samp 9** | **Samp 10** | **Samp 11** | **Samp 12** |
| **Polyol** | 100 | 100 | 100 | 100 | 100 | 100 |
| **Polyol functionality** | 2 | 2.5 | 2 | 2.5 | 2.5 | 2.5 |
| **Hydroxyl number** | 250 | 250 | 250 | 250 | 160 | 160 |
| **Potassium octoate** | 1.0 | 1.0 | 1.0 | 1.0 | 1.0 | 1.0 |
| **N-ethyl morpholine** | | | | | | |
| **Potassium acetate** | | | | | | |
| **Carboxylated quaternary ammonium N-hydroxy-alkyl** | | | | | | |
| **Water** | 1.7 | 5.6 | 3.1 | 5.3 | | |
| **Surfactant** | 3 | 2.5 | 2.5 | 4 | 2.5 | 3 |
| **Mineral fillers** | | | | | | |
| **Polyphosphates** | | | | | | |
| **Triethyl phosphate** | 10 | 12 | 11 | 12 | 10 | |
| **Expanding graphite** | 10 | 10 | | | | |
| **Dehydrating agent** | | | | | | 6 |
| **Deaerating agent** | | | | | | |
| **Polyisocyanate** | 143 | 180 | 180 | 180 | 116 | 155 |
| **Isocyanate functionality** | 2.85 | 2.9 | 2.85 | 2.85 | 2.7 | 2.7 |
| **NCO % by weight in isocyanate** | 31.5 | 31.5 | 31.5 | 31.5 | 31 | 31 |
| **Density (IS0845:2006) kg/m³** | 100 | 30 | 50 | 30 | 850 | 900 |
| **Dense smoke** | No | No | No | No | Yes | Yes |
| **Light smoke** | No | No | Yes | Yes | Yes | Yes |
| **Open flame** | No | No | Yes | Yes | Yes | Yes |
| **Dripping** | No | No | No | No | Yes | Yes |
| **Deformation** | No | No | No | Yes | Yes | Yes |
| **Breaking** | No | No | No | No | No | No |
| **Acceptable** | Yes | Yes | No | No | No | No |

**Table 1c**

| Parts compared to 100 of polyol, values expressed as phr (parts per hundred resin) | | | | | | |
|---|---|---|---|---|---|---|
| | **Samp 13** | **Samp 14** | **Samp 15** | **Samp 16** | **Samp 17** | **Samp 18** |
| **Polyol** | 100 | 100 | 100 | 100 | 100 | 100 |
| **Polyol functionality** | | | 2 | 2 | | |
| **Hydroxyl number** | 240 | 240 | 240 | 240 | | |
| **Potassium octoate** | 1.0 | 1.0 | 1.0 | 1.0 | 1.0 | 1.0 |
| **N-ethyl morpholine** | | | | | | |
| **Potassium acetate** | | | | | | |
| **Carboxylated quaternary ammonium N-hydroxy-alkyl** | | | | | | |
| **Water** | | | 1.7 | 4.8 | | |
| **Surfactant** | 3 | | 3 | 2.5 | 2.5 | 2.5 |
| **Mineral fillers** | | | | | | 30 |
| **Polyphosphates** | | | | | | 30 |
| **Triethyl phosphate** | 10 | 10 | 10 | 10 | 11 | 11 |
| **Expanding graphite** | | | 10 | 10 | | |
| **Dehydrating agent** | 7 | 8 | | | 6.5 | 6.5 |
| **Deaerating agent** | 0.3 | 0.3 | | | | |
| **Polyisocyanate** | 143 | 171 | 143 | 180 | 128 | 154 |
| **Isocyanate functionality** | 2.85 | 2.85 | 2.85 | 2.85 | 2.85 | 2.85 |
| **NCO % by weight in isocyanate** | 31.5 | 31.5 | 31.5 | 31.5 | 31.5 | 31.5 |
| **Density (IS0845:2006) kg/m³** | 950 | 940 | 100 | 35 | 850 | 900 |
| **Dense smoke** | Yes | Yes | Yes | Yes | Yes | Yes |
| **Light smoke** | Yes | Yes | Yes | Yes | Yes | Yes |
| **Open flame** | No | No | Yes | Yes | Yes | No |
| **Dripping** | Yes | Yes | Yes | Yes | Yes | No |
| **Deformation** | Yes | Yes | Yes | Yes | Yes | Yes |
| **Breaking** | No | No | Yes | Yes | No | Yes |
| **Acceptable** | No | No | No | No | No | No |

**Table 1d**

| Parts compared to 100 of polyol, values expressed as phr (parts per hundred resin) | | | | | | |
|---|---|---|---|---|---|---|
| | **Samp 19** | **Samp 20** | **Samp 21** | **Samp 22** | **Samp 23** | **Samp 24** |
| **Polyol** | 100 | 100 | 100 | 100 | 100 | 100 |
| **Polyol functionality** | | | | 2.5 | 2.5 | 2.5 |
| **Hydroxyl number** | | 160 | 160 | 160 | 160 | 250 |
| **Potassium octoate** | 1.0 | 1.0 | 1.0 | | | |
| **N-ethyl morpholine** | | | | 0.3 | 0.3 | 0.3 |
| **Potassium acetate** | | | | 2.0 | 2.5 | 2.0 |
| **Carboxylated quaternary ammonium N-hydroxy-alkyl** | | | | 0.7 | 0.7 | 0.7 |
| **Water** | | | | | | 1.1 |
| **Surfactant** | 3 | 3 | 4 | 2.5 | 3 | 2.5 |
| **Mineral fillers** | 40 | | 60 | | | |
| **Polyphosphates** | 40 | | 40 | | | |
| **Triethyl phosphate** | 11 | 10 | 10 | 10 | | 10 |
| **Expanding graphite** | | | | | | 5 |
| **Dehydrating agent** | 6.5 | 5 | 5 | | 6 | |
| **Deaerating agent** | | 0.4 | 0.4 | | | |
| **Polyisocyanate** | 179 | 115 | 153 | 116 | 155 | 180 |
| **Isocyanate functionality** | 2.85 | 2.85 | 2.85 | 2.7 | 2.7 | 2.7 |
| **NCO % by weight in isocyanate** | 31.5 | 31.5 | 31.5 | 31 | 31 | 31 |
| **Density (IS0845:2006) kg/m³** | 850 | 930 | 850 | 850 | 900 | 50 |
| **Dense smoke** | Yes | Yes | No | Yes | Yes | No |
| **Light smoke** | | Yes | Yes | Yes | Yes | No |
| **Open flame** | No | Yes | No | Yes | Yes | No |
| **Dripping** | No | Yes | No | Yes | Yes | No |
| **Deformation** | Yes | Yes | Yes | Yes | Yes | No |
| **Breaking** | Yes | No | Yes | No | No | No |
| **Acceptable** | No | No | No | No | No | Yes |

**Table 1e**

| Parts compared to 100 of polyol, values expressed as phr (parts per hundred resin) | | | | | | |
|---|---|---|---|---|---|---|
| | **Samp 25** | **Samp 26** | **Samp 27** | | | |
| **Polyol** | 100 | 100 | 100 | | | |
| **Polyol functionality** | 2.5 | 2 | 2.5 | | | |
| **Hydroxyl number** | 250 | 250 | 250 | | | |
| **Potassium octoate** | | 1.0 | 1.0 | | | |
| **N-ethyl morpholine** | 0.3 | | | | | |
| **Potassium acetate** | 2.5 | | | | | |
| **Carboxylated quaternary ammonium N-hydroxy-alkyl** | 0.7 | | | | | |
| **Water** | 1.7 | 0.4 | 0.25 | | | |
| **Surfactant** | 3 | 4 | 4 | | | |
| **Mineral fillers** | | | | | | |
| **Polyphosphates** | | | | | | |
| **Triethyl phosphate** | 11 | 11 | 11 | | | |
| **Expanding graphite** | 10 | 10 | 5 | | | |
| **Dehydrating agent** | | | | | | |
| **Deaerating agent** | | | | | | |
| **Polyisocyanate** | 180 | 180 | 180 | | | |
| **Isocyanate functionality** | 2.7 | 2.9 | 2.9 | | | |
| **NCO % by weight in isocyanate** | 31 | 31 | 31.5 | | | |
| **Density (IS0845:2006) kg/m³** | 150 | 400 | 700 | | | |
| **Dense smoke** | No | No | No | | | |
| **Light smoke** | No | No | No | | | |
| **Open flame** | No | No | No | | | |
| **Dripping** | No | No | No | | | |
| **Deformation** | No | No | No | | | |
| **Breaking** | No | Yes | Yes | | | |
| **Acceptable** | Yes | No | No | | | |

### Embodiments of profiles for fire doors/windows

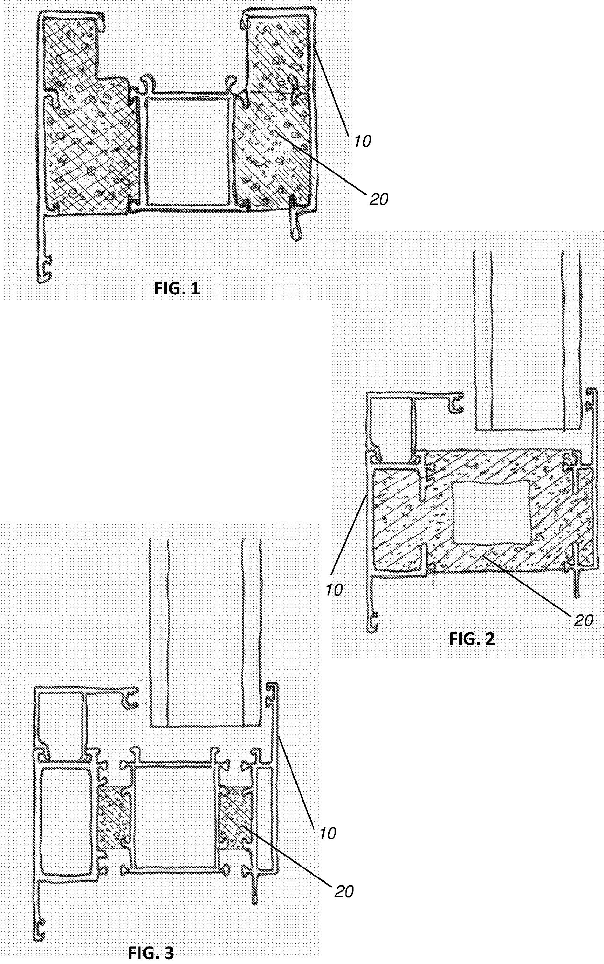

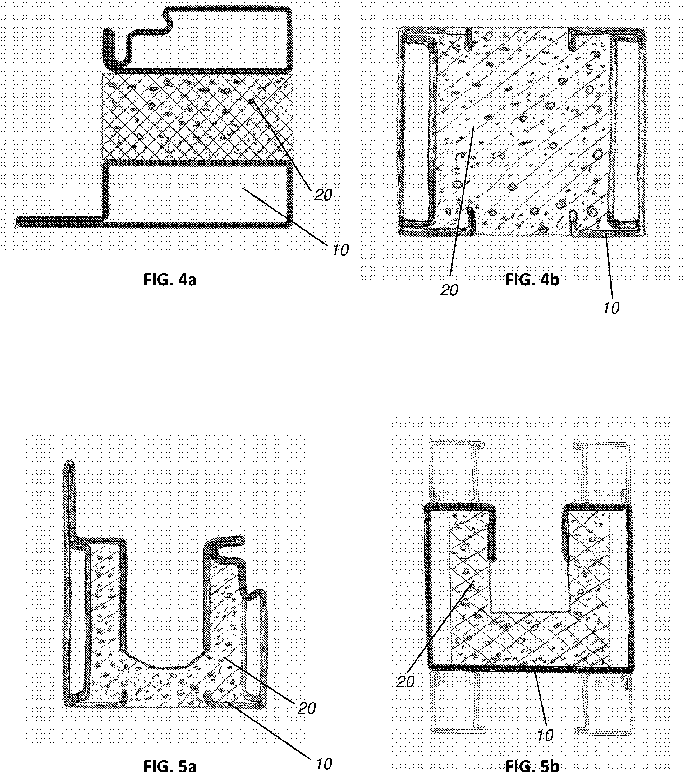

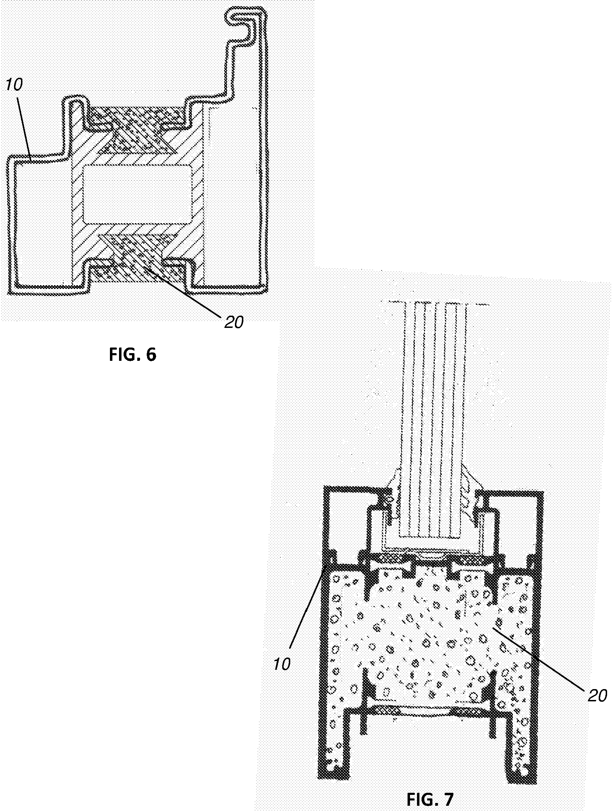

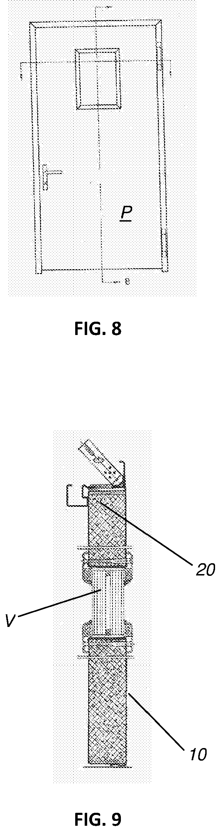

Various profiles for fire doors/windows were manufactured using the compositions like in examples 1 to 6, 8, 24 and 25, illustrated in FIGS. 1 - 9. In such figures, the frame of the profile is indicated with **10,** while the compact polyurethane is indicated with **20.**

The figures regard:
FIG. 1: profile for fire damper doors/windows with lateral structures made of any material, hollow central bearing structure in which steel hardware can be housed, joining the parts made of polyisocyanurate according to example 1 above;
FIG. 2: profile for fire damper doors/windows with lateral structures made of any material, central insulating structure for joining and sustaining in case of fire made of compact polyisocyanurate according to example 1 above with cavity for the passage of hardware;
FIG. 3: profile for fire damper doors/windows with lateral structures and central bearing structure made of steel, connection between the parts made of compact polyisocyanurate according to example 1 above with heat-damping function;
FIGS. 4a and 4b: profile for fire damper doors/windows with lateral structures and central bearing structure made of any material, central bearing structure made of compact polyisocyanurate according to example 1 above with heat-insulation function;
FIGS. 5a and 5b: profile for fire damper doors/windows with lateral structures made of any material and central part made of polyisocyanurate according to example 3 above, with a U-shaped structure; the hardware which can for example be covered with an easily removable snap-fixed sheet is arranged in the cavity. This enables performing compulsory maintenance operations on the hardware of the fire damper door/window without removing the door/window from the hinges, by simply removing the cover sheet;
FIG. 6: profile for fire damper doors/windows with lateral structures made of any material, central bearing structure obtained from pultrusion (thick dashes), connection of the structures made of polyisocyanurate according to example 1 above (thin dashes). The compact polyisocyanurate is prepared *in situ* by injecting into the cavity formed by the other pre-assembled elements and an external mould. Central hole for the passage of the hardware;
FIG. 7: profile for fire damper doors/windows obtained by adapting a traditional non-fire damper structure. Lateral bearing structure mutually joined using continuous heat-damping profiles (usually made of polyamide), turned into fire-damper by simply filling it by injecting the polyisocyanurate according to example 3 above (*in situ*) using the structure as a formwork.
FIG. 8: Perspective view of a steel blind fire door **P.**
FIG. 9: Vertical section of the door of FIG. 8. Internal insulation made of polyisocyanurate according to example 8 above, prepared *in situ* by injecting the components into the cavity formed by the pre-assembled box-shaped element of the door used as a formwork. The door includes an infill element **V** made of stratified glass.

## Claims

1. The use of a polyisocyanurate for manufacturing profiles for fire doors or windows and/or for manufacturing fire doors or windows, **characterized in that** the profiles for fire doors or windows and/or the fire doors or windows comply with the UNI EN 1634-1 and/or UNI-EN 1364-1 standards, the polyisocyanurate being obtainable by mixing and curing a composition consisting of:
a) aromatic polyisocyanates having functionalities higher than or equal to 2,5;
b) aromatic polyester polyols having substantially all primary hydroxyl groups, the aromatic polyester polyols having functionalities higher than or equal to 2 and an hydroxyl number of 150 mgKOH / g to 350 mgKOH / g;
c) at least one trimerisation catalyst;
d) at least one flame retardant agent;
e) at least one surfactant agent;
f) possibly at least one filler;
g) possibly at least one further additive selected from the group consisting of: at least one dehydrating agent, at least one deaerating agent, at least one expanding agent consisting exclusively of water, expanding graphite;
wherein the composition is free of chain extender agents and tertiary amine; and
wherein the composition has an isocyanate index of 200 to 400, preferably of 300 to 350; and
wherein:
in case the polyisocyanurate is of the substantially porosity-free compact type with a density higher than 800 kg/m³ measured in compliance with the EN ISO 845:2006 standard:
- the composition is substantially free of air, free of said expanding graphite and free of said expanding agent; and
- said at least one further additive consisting of:
g1.1) said at least one dehydrating agent;
g1.2) said at least one deaerating agent;
or
in case the polyisocyanurate has a density measured in compliance with the EN ISO 845:2006 standard of 400 kg/m³ to 800 kg/m³:
- the composition is free of said expanding graphite, said dehydrating agent and said deaerating agent; and
- said at least one further additive consisting of:
g2.1) said at least one expanding agent in an amount of less than 1 phr of water
per 100 phr of polyol, preferably less than 0,5 phr of water per 100 phr of polyol;
or
in case the polyisocyanurate is of the expanded type with a density measured in compliance with the EN ISO 845:2006 standard comprised between 20 kg/m³ and 400 kg/m³, preferably comprised between 100 kg/m³ and 400 kg/m³:
- the composition is free of said dehydrating agent and said deaerating agent;
- said at least one further additive consisting of:
g3.1) said expanding graphite;
g3.2) said expanding agent.

2. Use according to claim 1, wherein the aromatic polyisocyanates have functionalities of 2.7 to 2.9.

3. Use according to claim 1, wherein the polyols have functionalities substantially equal to 2.

4. Use according to any one of the preceding claims, comprising a liquid phase and a solid phase, wherein the latter is less than 5% by weight with respect to the total weight of the composition.

5. Use according to any one of the preceding claims, wherein said at least one trimerisation catalyst consists of at least one fatty acid alkali salt.

6. Use according to any one of the preceding claims, wherein said at least one surfactant agent consists of a polyether modified polysiloxane copolymer.

7. Use according to any one of the preceding claims, wherein the at least one deaerating agent is a polyoxyalkyl- polysiloxane in non-aqueous solution.

8. Use according to any one of the preceding claims, wherein the at least one dehydrating agent is a zeolite in castor oil.

9. Use according to any one of the preceding claims, wherein said expanding graphite is in flakes.

10. Use according to the preceding claim, wherein said expanding graphite is a mixture of flakes of at least two different dimensions.

11. A profile for fire doors or windows complying with the UNI EN 1634-1 and/or UNI-EN 1364-1 standards comprising or consisting of a polyisocyanurate as defined in any one of the preceding claims.

12. A fire door or window complying with the UNI EN 1634-1 and/or UNI-EN 1364-1 standards comprising or consisting of a polyisocyanurate as defined in any one of the claims 1 to 10.

## Patentansprüche

1. Verwendung von Polyisocyanurat für die Herstellung von Profilen für Feuertüren oder-fenster und/oder für die Herstellung von Feuertüren oder -fenstern, **dadurch gekennzeichnet, dass** die Profile für Feuertüren oder -fenster und/oder die Feuertüren oder -fenster den Standards UNI EN 1634-1 und/oder UNI EN 1364-1 entsprechen, wobei das Polyisocyanurat erhältlich ist durch Mischen und Härten einer Zusammensetzung bestehend aus:
a) aromatischen Polyisocyanaten mit Funktionalitäten höher als oder gleich 2,5;
b) aromatischen Polyester-Polyolen, die im Wesentlichen alles primäre Hydroxylgruppen haben, wobei die aromatischen Polyester-Polyole Funktionalitäten höher als oder gleich 2,0 aufweisen und eine Hydroxylzahl von 150 mgKOH/g bis 350 mgKOH/g;
c) wenigstens einem Trimerisationskatalysator;
d) wenigstens einem Flammschutzmittel;
e) wenigstens einem oberflächenaktiven Agens;
f) eventuell wenigstens einem Füllstoff;
g) eventuell wenigstens einem weiteren Additiv ausgewählt aus der Gruppe bestehend aus:
wenigstens einem Dehydratisierungsmittel, wenigstens einem Entlüftungsmittel, wenigstens einem Treibmittel bestehend ausschließlich aus Wasser, expandierendem Graphit;
wobei die Zusammensetzung frei ist von Kettenverlängerungsmitteln und tertiären Aminen und wobei die Zusammensetzung einen Isocyanatindex hat von 200 bis 400, vorzugsweise von 300 bis 350 und
wobei, falls das Polyisocyanat im Wesentlichen vom porositätsfreien kompakten Typ ist, mit einer Dichte größer als 800 kg/m³, gemessen im Einklang mit dem Standard EN ISO 845:2006,
- die Zusammensetzung im Wesentlichen frei von Luft ist, frei von dem genannten expandierenden Graphit und frei von dem genannten Treibmittel und
- das genannte wenigstens eine weitere Additiv besteht aus:
g1.1) dem genannten wenigstens einen Dehydratisierungsmittel;
g1.2) dem genannten wenigstens einen Entlüftungsmittel;
in dem Fall, dass das Polyisocyanat eine Dichte von 400 kg/m³ bis 800 kg/m³ aufweist, gemessen im Einklang mit dem Standard EN ISO 845:2006:
- die Zusammensetzung frei ist von dem genannten expandierenden Graphit, dem genannten Dehyratisierungsmittel und dem genannten Entlüftungsmittel und
- das genannte wenigstens eine weitere Additiv besteht aus:
g2.1) dem genannten wenigstens einen Treibmittel in einer Menge von weniger als 1 phr an Wasser pro 100 phr an Polyol, vorzugsweise weniger als 0,5 phr an Wasser pro 100 phr an Polyol;
in dem Fall, dass das Polyisocyanat eine Dichte zwischen 20 kg/m³ und 400 kg/m³ aufweist, gemessen im Einklang mit dem Standard EN ISO 845:2006, vorzugsweise zwischen 100 kg/m³ und 400 kg/m³:
- die Zusammensetzung frei ist von dem genannten Dehydratisierungsmittel und dem genannten Entlüftungsmittel;
- das genannte wenigstens eine weitere Additiv besteht aus:
g3.1) dem genannten expandierenden Graphit;
g3.2) dem genannten Treibmittel.

2. Verwendung nach Anspruch 1, bei der die aromatischen Polyisocyanate Funktionalitäten von 2,7 bis 2,9 aufweisen.

3. Verwendung nach Anspruch 1, bei der die Polyole Funktionalitäten von im Wesentlichen gleich 2 aufweisen.

4. Verwendung nach einem der vorhergehenden Ansprüche, umfassend eine flüssige Phase und eine feste Phase, wobei die letztere weniger als 5 Gew.-% beträgt, bezogen auf das Gesamtgewicht der Zusammensetzung.

5. Verwendung nach einem der vorhergehenden Ansprüche, bei der der genannte wenigstens eine Trimerisationskatalysator aus wenigstens einem Fettsäurealkalisalz besteht.

6. Verwendung nach einem der vorhergehenden Ansprüche, bei der das genannte wenigstens eine oberflächenaktive Agens aus einem mittels eines Polyethers modifizierten Polysiloxan-Copolymeren besteht.

7. Verwendung nach einem der vorhergehenden Ansprüche, bei der das wenigstens eine Entlüftungsmittel ein Polyoxyalkyl-Polysiloxan in nicht-wässriger Lösung ist.

8. Verwendung nach einem der vorhergehenden Ansprüche, bei der das wenigstens eine Dehydratisierungsmittel ein Zeolith in Rizinusöl ist.

9. Verwendung nach einem der vorhergehenden Ansprüche, bei der das genannte expandierende Graphit in Flocken vorliegt.

10. Verwendung nach dem vorhergehenden Anspruch, bei der das genannte expandierende Graphit eine Mischung aus Flocken mit wenigstens zwei unterschiedlichen Größen ist.

11. Profil für Feuertüren oder -fenster im Einklang mit den Standards UNI EN 1634-1 und/oder UNI EN 1364-1 umfassend ein oder bestehend aus einem Polyisocyanurat wie in einem der vorhergehenden Ansprüche definiert.

12. Feuertür oder -fenster im Einklang mit den Standards UNI EN 1634-1 und/oder UNI EN 1364-1 umfassend ein oder bestehend aus einem Polyisocyanurat wie in einem der Ansprüche 1 bis 10 definiert.

## Revendications

1. Utilisation d'un polyisocyanurate pour fabriquer des profilés de portes ou fenêtres coupe-feu et/ou pour fabriquer des portes ou fenêtres coupe-feu, **caractérisée en ce que** les profilés de portes ou fenêtres coupe-feu et/ou les portes ou fenêtres coupe-feu sont conformes aux normes UNI EN 1634-1 et/ou UNI-EN 1364-1, le polyisocyanurate pouvant être obtenu par le mélange et le durcissement d'une composition constituée de :
a) polyisocyanates aromatiques ayant des fonctionnalités supérieures ou égales à 2,5 ;
b) polyester-polyols aromatiques ayant sensiblement tous les groupes hydroxyle primaires, les polyester-polyols aromatiques ayant des fonctionnalités supérieures ou égales à 2 et un indice d'hydroxyle de 150 mgKOH/g à 350 mgKOH/ g ;
c) au moins un catalyseur de trimérisation ;
d) au moins un agent ignifuge ;
e) au moins un agent tensioactif ;
f) éventuellement au moins une charge ;
g) éventuellement au moins un additif supplémentaire choisi dans le groupe constitué : d'au moins un agent déshydrateur, d'au moins un agent de désaération, d'au moins un agent expansif constitué exclusivement d'eau, d'un graphite expansif ;
dans laquelle la composition est dépourvue d'agents allongeurs de chaîne et d'amine tertiaire ; et
dans laquelle la composition a un indice d'isocyanate de 200 à 400, de préférence de 300 à 350 ; et
dans laquelle :
dans le cas où le polyisocyanurate est du type compact sensiblement dépourvu de porosité avec une masse volumique supérieure à 800 kg/m³ mesurée conformément à la norme EN ISO 845:2006 :
- la composition est sensiblement dépourvue d'air, dépourvue dudit graphite expansif et dépourvue dudit agent expansif ; et
- ledit au moins un additif supplémentaire étant constitué :
g1.1) dudit au moins un agent déshydrateur ;
g1.2) dudit au moins un agent de désaération ;
ou
dans le cas où le polyisocyanurate a une masse volumique mesurée conformément à la norme EN ISO 845:2006 de 400 kg/m³ à 800 kg/m³ :
- la composition est dépourvue dudit graphite expansif, dudit agent déshydrateur et dudit agent de désaération ; et
- ledit au moins un additif supplémentaire étant constitué :
g2.1) dudit au moins un agent expansif en une quantité inférieure à 1 ppc d'eau pour 100 ppc de polyol, de préférence inférieure à 0,5 ppc d'eau pour 100 ppc de polyol ;
ou
dans le cas où le polyisocyanurate est du type expansé avec une masse volumique mesurée conformément à la norme EN ISO 845:2006 comprise entre 20 kg/m³ et 400 kg/m³, de préférence comprise entre 100 kg/m³ et 400 kg/m³ :
- la composition est dépourvue dudit agent déshydrateur et dudit agent de désaération ;
- ledit au moins un additif supplémentaire étant constitué :
g3.1) dudit graphite expansif ;
g3.2) dudit agent expansif.

2. Utilisation selon la revendication 1, dans laquelle les polyisocyanates aromatiques ont des fonctionnalités de 2,7 à 2,9.

3. Utilisation selon la revendication 1, dans laquelle les polyols ont des fonctionnalités sensiblement égales à 2.

4. Utilisation selon l'une quelconque des revendications précédentes, comprenant une phase liquide et une phase solide, dans laquelle cette dernière est inférieure à 5 % en poids par rapport au poids total de la composition.

5. Utilisation selon l'une quelconque des revendications précédentes, dans laquelle ledit au moins un catalyseur de trimérisation est constitué d'au moins un sel alcalin d'acide gras.

6. Utilisation selon l'une quelconque des revendications précédentes, dans laquelle ledit au moins un agent tensioactif est constitué d'un copolymère polysiloxane modifié par polyéther.

7. Utilisation selon l'une quelconque des revendications précédentes, dans laquelle l'au moins un agent de désaération est un polyoxyalkyl-polysiloxane dans une solution non aqueuse.

8. Utilisation selon l'une quelconque des revendications précédentes, dans laquelle l'au moins un agent déshydrateur est une zéolite dans de l'huile de ricin.

9. Utilisation selon l'une quelconque des revendications précédentes, dans laquelle ledit graphite expansif est en lamelles.

10. Utilisation selon la revendication précédente, dans laquelle ledit graphite expansif est un mélange de lamelles d'au moins deux dimensions différentes.

11. Profilé de portes ou fenêtres coupe-feu conforme aux normes UNI EN 1634-1 et/ou UNI-EN 1364-1 comprenant ou étant constitué d'un polyisocyanurate tel que défini dans l'une quelconque des revendications précédentes.

12. Porte ou fenêtre coupe-feu conforme aux normes UNI EN 1634-1 et/ou UNI-EN 1364-1 comprenant ou étant constituée d'un polyisocyanurate tel que défini dans l'une quelconque des revendications 1 à 10.
